# FASCICULE DE BREVET EUROPEEN

(11) **EP 4 143 046 B1**
(45) Date de publication et mention de la délivrance du brevet: **09.07.2025**
(21) Numéro de dépôt: 21718572.7
(22) Date de dépôt: 13.04.2021
(51) Int. Cl.: B60K 6/547, B60K 6/48, B60W 10/02, B60W 10/08, B60W 20/00, B60K 6/442, B60K 6/36

(54) **PROCÉDÉ ET DISPOSITIF D'IMMOBILISATION À L'ARRÊT D'UN VÉHICULE ROUTIER**
VERFAHREN UND VORRICHTUNG ZUR IMMOBILISIERUNG EINES STRASSENFAHRZEUGS IM STILLSTAND
METHOD AND DEVICE FOR IMMOBILISING A ROAD VEHICLE AT A STANDSTILL

(30) Priorité: 28.04.2020 FR 2004241
(43) Date de publication de la demande: 08.03.2023
(73) Titulaire: Horse Powertrain Solutions, S.L.U., 28108 Alcobendas, Madrid (ES)
(72) Inventeur: BEISBARDT, Olivier, 91470 Forge les bains (FR); MERCAY, Patrice, 78180 Montigny le bretonneux (FR); RUELLO, Maxime, 78084 Guyancourt Cedex (FR)
(74) Mandataire: Elzaburu S.L.P.
(86) Numéro de dépôt international: PCT/EP2021/059557
(87) Numéro de publication internationale: WO 2021/219365

(56) Documents cités:
- EP-A1- 3 309 031
- WO-A1-2019/219294
- DE-A1- 102010 004 711
- DE-T5- 112014 000 581

## Description

La présente invention se rapporte au contrôle des groupes motopropulseurs hybrides, et de leur immobilisation à l'arrêt. Plus précisément, elle a pour objet un procédé et un dispositif d'immobilisation à l'arrêt d'un véhicule routier, par appui de sa masse sur la résistance en compression de son moteur thermique. Sur des véhicules hybrides disposant d'une machine électrique liée au moteur thermique, il peut être nécessaire de maintenir le véhicule arrêté, sur la résistance en compression de son moteur thermique, notamment par grand froid. Dans ces circonstances, il faut maintenir le vilebrequin du moteur en liaison mécanique avec les roues du véhicule. La transmission doit pour cela être « fermée » avec un rapport engagé.

Avec une transmission manuelle, le conducteur qui souhaite bénéficier de la résistance en compression du moteur thermique pour immobiliser son véhicule, notamment en pente, a le réflexe d'engager une vitesse, après avoir coupé le moteur, et éventuellement avoir serré les freins.

S'il relâche ensuite ses freins, le véhicule a tendance à effectuer un sursaut incontrôlé vers l'avant ou vers l'arrière. Ce sursaut résulte de l'écart existant entre deux positions de compression voisines du vilebrequin. Son amplitude est fonction de la démultiplication entre le moteur et les roues, et du rayon des roues. Il permet au véhicule d'ajuster sa position, sur la compression d'un cylindre.

Le sursaut du véhicule peut atteindre plusieurs dizaines de centimètres. Cette distance est déterminée par l'angle de rotation du vilebrequin entre deux compressions. Elle correspond au produit de l'angle de rotation du vilebrequin **α,** par le ratio de démultiplication jusqu'à la roue r, par le rayon de la roue R, et par 2**Π**/360.

De manière générale, si le conducteur dispose de la possibilité d'abandonner volontairement son véhicule moteur arrêté, « en prise » sur un rapport engagé, que ce soit sur un véhicule thermique ou hybride, le véhicule risque de réagir par un sursaut, pour placer son moteur sur une position de compression, lors du relâchement des freins.

WO 2019/219294 A1 présente une transmission hybride pour véhicule automobile muni d'un moteur thermique et d'une machine électrique de traction déportée sur la même ligne, comprenant deux arbres primaires concentriques liés respectivement au moteur thermique et à la machine électrique sans embrayage de coupure, un arbre secondaire relié aux roues du véhicule par un différentiel, et un arbre de transfert de mouvement d'un arbre primaire sur l'arbre secondaire et de couplage des arbres primaires, caractérisée en ce qu'elle comporte seulement trois pignons fous primaires associés au moteur thermique, dont les deux premiers tournent autour de l'arbre primaire lié au moteur thermique et dont le troisième tourne autour de l'arbre de transfert, et au moins un pignon primaire fixé sur l'arbre primaire lié à la machine électrique de traction.

DE 10 2010 004711 A1 présente une chaîne cinématique hybride et une méthode de commande de celle-ci. L'invention concerne une chaîne cinématique hybride pour un véhicule automobile, comprenant une première unité d'entraînement, une boîte de vitesses à double embrayage et une machine électrique, la boîte de vitesses à double embrayage comprenant un premier et un deuxième embrayage à friction ainsi qu'une première et une deuxième transmission partielle, des rapports impairs étant associés à la première transmission partielle et des rapports pairs à la deuxième transmission partielle, et la machine électrique étant associée à l'une des transmissions partielles. Un troisième embrayage à friction est disposé entre les deux embrayages à friction et la première unité d'entraînement.

EP 3309031 A1 présente un dispositif de commande de transition de mode pour un véhicule hybride, ledit véhicule hybride comprenant un moteur à combustion interne (ICE) prévu pour être relié mécaniquement à une roue motrice par l'intermédiaire d'un premier embrayage (C1) mis en prise par une course d'embrayage depuis une position débrayée; un premier moteur électrique (MG1) prévu pour être relié mécaniquement à la roue motrice par l'intermédiaire d'un troisième embrayage (C3) mis en prise par une course d'embrayage depuis une position débrayée; un deuxième moteur électrique (MG2) relié mécaniquement au moteur à combustion interne, et une batterie reliée électriquement au premier moteur électrique et au deuxième moteur électrique. Lorsqu'une batterie (SOC) est à une valeur seuil de demande de production d'énergie A ou inférieure, le véhicule se déplace dans un « mode HEV en série », dans lequel le premier moteur électrique (premier moteur/générateur MG1), auquel l'énergie électrique générée par le second moteur/générateur (MG2) et l'énergie de la batterie sont fournies, est utilisé comme source d'entraînement. Le véhicule hybride est équipé d'une unité de contrôle de la transmission pour effectuer une commande de sorte que le mode de déplacement passe à un « mode HEV parallèle » lorsque la vitesse du véhicule (VSP) a atteint une vitesse de commutation pendant le déplacement en « mode HEV série ». Lorsqu'une augmentation de la température du second système de production d'énergie, y compris le second moteur-générateur (MG2), est prévue pendant le déplacement en « mode HEV série », l'unité de commande de la transmission modifie la vitesse de commutation du véhicule en une seconde vitesse de commutation du véhicule (VSP2) qui est plus lente que la première vitesse de commutation du véhicule (VSP1) utilisée avant la détermination de l'augmentation de la température.

DE 11 2014 000581 T5 présente un véhicule hybride (1A), qui comprend une transmission à double embrayage présentant six rapports de marche avant. Sont agencés dans le véhicule hybride (1A) entre un premier arbre d'entrée et un premier arbre de sortie de la transmission : un premier train d'engrenages (G1) correspondant à une vitesse ; un troisième train d'engrenages (G3) correspondant à trois vitesses ; un cinquième train d'engrenages (G5) correspondant à cinq vitesses ; et un sixième train d'engrenages (G6) correspondant à six vitesses. Un deuxième train d'engrenages (G2) correspondant à deux vitesses et un quatrième train d'engrenages (G4) correspondant à quatre vitesses sont agencés entre un second arbre d'entrée et un second arbre de sortie. Une première chemise est disposée entre le premier train d'engrenages (G1) et le troisième train d'engrenages (G3) ; une deuxième chemise est disposée entre le cinquième train d'engrenages (G5) et le sixième train d'engrenages (G6); et une troisième chemise est disposée entre le deuxième train d'engrenages (G2) et le quatrième train d'engrenages (G4). Un second Moteur/Générateur MG est utilisé afin d'être apte à sortir une force motrice vers le second arbre d'entrée. La présente invention vise à supprimer tout risque de réaction du véhicule lors de la fermeture de sa chaîne cinématique, avec le moteur coupé.

Dans ce but, elle propose de procéder aux opérations suivantes :
- immobilisation du véhicule par ses freins de roues, coupure du moteur,
- ouverture de la transmission du véhicule de manière à découpler le moteur thermique des roues,
- ajustement angulaire du vilebrequin du moteur sur la compression d'au moins un cylindre, réalisé par une machine électrique connectée au vilebrequin, et
- fermeture de la transmission du véhicule.

De préférence, l'ensemble constitué par le moteur thermique et la première machine électrique, n'est pas relié mécaniquement aux roues du véhicule pendant l'ajustement du vilebrequin.

Le dispositif d'immobilisation à l'arrêt d'un véhicule routier par appui de sa masse sur la résistance en compression de son moteur thermique qui est proposé, comporte un premier moyen de couplage capable de connecter l'ensemble constitué par le moteur et une machine électrique à la transmission, ou de les déconnecter pour permettre l'ajustement angulaire du vilebrequin.

Cette invention trouve une application privilégiée, mais non limitative, sur un véhicule disposant d'un groupe motopropulseur hybride.

L'utilisation d'une ou plusieurs machines électriques pour placer le moteur thermique sur une compression juste avant de refermer la transmission, permet d'immobiliser parfaitement le véhicule à l'arrêt.

D'autres caractéristiques et avantages de la présente invention, apparaîtront clairement à la lecture de la description suivante d'un mode de réalisation non limitatif de celle-ci, en se reportant aux dessins annexés.
[Fig. 1] est un schéma cinématique de GMP hybride.
[Fig. 2] isole une partie de celle-ci.
[Fig. 3A] traduit graphiquement l'ajustement du vilebrequin.
[Fig. 3B] également.
[Fig. 4] illustre le procédé.

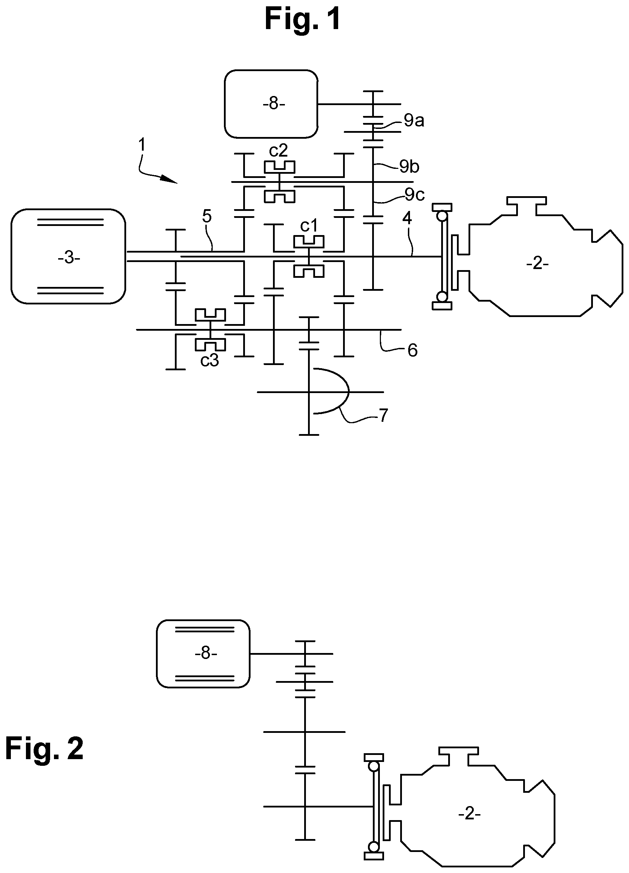

Le dispositif d'immobilisation à l'arrêt d'un véhicule routier par appui sur la résistance en compression de son moteur thermique, est illustré de manière non limitative par la figure 1. Ce schéma correspond à l'architecture cinématique d'un groupe motopropulseur (GMP) hybride tel celui qui est décrit de manière détaillée dans la publication FR 3 022 495, à laquelle on pourra se reporter par référence.

Ce GMP est composé d'une transmission à rapports étagés 1, réunissant le couple d'un moteur thermique 2, et d'une machine électrique de traction 3, en direction des roues d'un véhicule. Le moteur 2, et la machine, 3 sont placés sur une ligne d'arbres primaires concentriques 4, 5. Leurs couples sont regroupés sur un arbre secondaire 6 entraînant un différentiel 7 qui répartit le couple entre les deux roues d'un essieu. Le moteur thermique 2 est connecté à une autre machine électrique 8, telle qu'un démarreur, ou une machine d'appoint, par une descente d'engrenages 9a, 9b, 9c.

Le dispositif d'immobilisation proposé comporte :
- un premier moyen de couplage C3 capable de connecter l'ensemble constitué par le moteur et une machine électrique 8 à la transmission, ou de les déconnecter pour permettre l'ajustement angulaire du vilebrequin,
- un deuxième moyen de couplage C2 capable de connecter une machine électrique de traction 3 à la transmission pour faire varier la position des arbres de celle-ci lors de l'ajustement angulaire du vilebrequin, et
- un troisième moyen de couplage C1, qui sert à coupler directement le moteur 2 et la machine de traction 3.

La fermeture cumulée des deux moyens de couplage C3, C2, assure l'engagement d'un rapport de transmission sur lequel le moteur thermique est connecté aux roues. Sur ce rapport, la machine électrique de traction 3 est également connectée aux roues.

La transmission 1 permet de transférer aux roues la résistance en compression du moteur thermique 2 à l'arrêt, pour immobiliser le véhicule si les deux coupleurs C3 et C2 sont serrés lors du relâchement des freins du véhicule. La fermeture cumulée de ces deux coupleurs permet de fermer transmission, et d'immobiliser le véhicule à l'arrêt en engageant un rapport sur lequel le moteur thermique 2 est connecté aux roues, ainsi que la machine électrique de traction 3.

Dans cet état, la transmission est capable de limiter, et même de supprimer complètement le léger déplacement du véhicule résultant de son sursaut, qui est normalement nécessaire pour trouver un appui sur la compression d'un cylindre du moteur thermique 2, une fois le véhicule est arrêté et son moteur coupé. Ce résultat est obtenu grâce à l'intervention sur le moteur thermique, d'une machine électrique 8 ou 3. L'intervention consiste à actionner une machine électrique 8 ou 3, pour réaliser un ajustement angulaire du vilebrequin sur une position de compression du moteur 2 pendant que le véhicule est retenu à l'arrêt par ses freins de roue, moteur coupé avec sa transmission ouverte, avant de refermer celle-ci.

Dans un premier mode de réalisation, l'ajustement angulaire du vilebrequin est réalisé par la machine électrique 8, qui lui est connectée par la descente d'engrenages 9a, 9b, 9c. En alternative à la descente d'engrenages 9a, 9b, 9c, la descente du mouvement de la machine électrique 8 sur le moteur thermique 2 peut être assurée par une courroie, ou tout autre moyen de transfert.

La machine 8 est une machine électrique pilotable en effort et/ou en position, par exemple un démarreur, ou une simple machine d'appoint. Pendant l'ajustement du vilebrequin par la machine 8, l'ensemble constitué par le moteur thermique 2 et la machine 8, qui est isolé sur la figure 2, n'est pas relié mécaniquement aux roues du véhicule, car tous les coupleurs de la transmission sont ouverts.

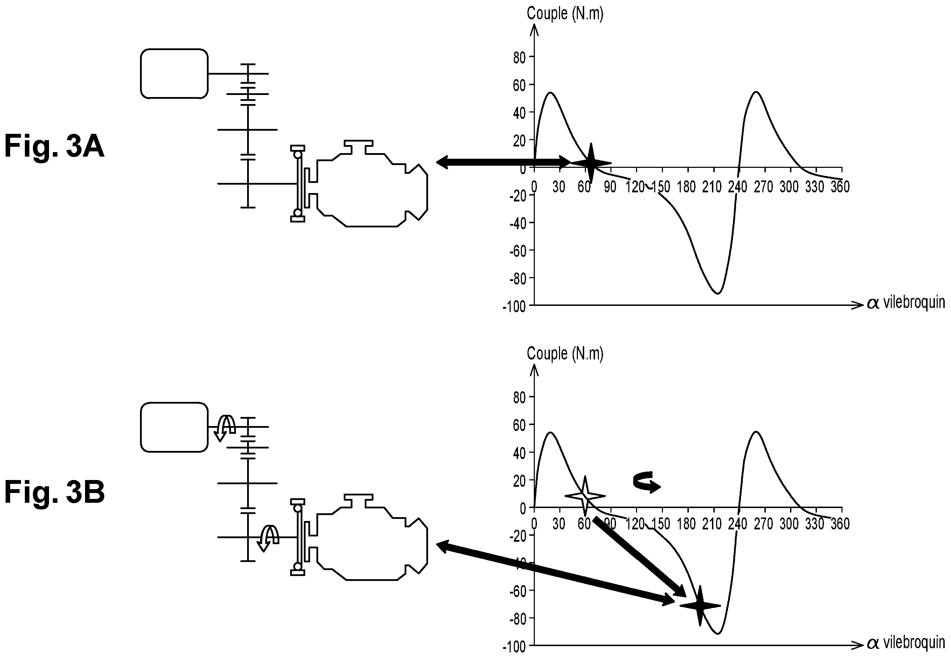

L'immobilisation à l'arrêt du véhicule se déroule de la façon suivante. Le conducteur freine jusqu'à l'arrêt du véhicule. Le moteur thermique 2 est ensuite coupé à la demande du conducteur. La déconnection du moteur avec les roues est assurée par l'ouverture des coupleurs C3 et C2. L'ensemble moteur thermique 2 - première machine électrique 8, est alors indépendant des roues. Initialement, la position angulaire du vilebrequin est aléatoire, comme sur la figure 3A. On fait alors tourner le moteur thermique 2 grâce à la machine électrique 8, pour ajuster le vilebrequin sur la compression d'un cylindre. Ce mouvement se poursuit jusqu'à la position illustrée par la figure 3B. A partir de celle-ci, la machine électrique 8 maintient le vilebrequin en position.

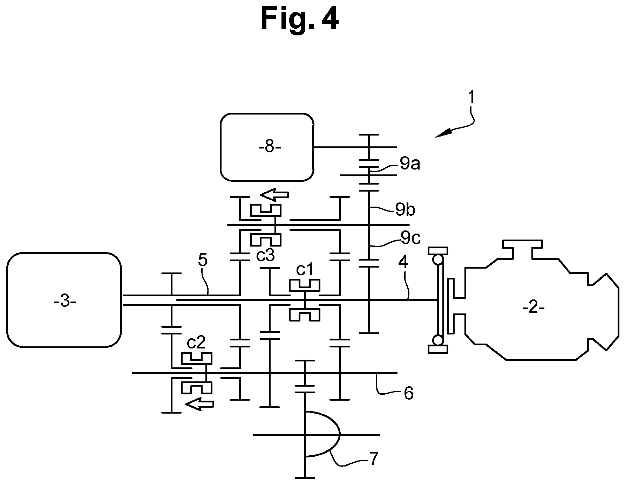

L'opération suivante porte sur la transmission 1 du véhicule. L'engagement d'un rapport, par exemple un premier rapport de marche avant est réalisé en fermant les coupleurs C3 et C2 sur la figure 4. Leur fermeture permet au mouvement du moteur thermique 2 et de la machine électrique 8, de descendre sur le différentiel 7, en direction des roues. Le moteur thermique 2 est alors lié aux roues sur le premier rapport thermique, et la masse du véhicule est en appui sur la compression d'un cylindre.

En résumé, le procédé d'immobilisation d'un véhicule à l'arrêt, par appui de sa masse sur la résistance en compression du moteur thermique, comporte essentiellement les étapes suivantes :
- immobilisation du véhicule par ses freins de roues,
- coupure du moteur 2,
- ouverture de la transmission 1 du véhicule de manière à découpler le moteur 2 des roues,
- ajustement angulaire du vilebrequin du moteur 2 sur la compression d'au moins un cylindre réalisé par une machine électrique connectée au vilebrequin, et
- fermeture de la transmission 1 du véhicule.

En variante, on peut faire varier légèrement la position du vilebrequin, grâce à la machine électrique de traction 3, et aux arbres internes de la boîte. Leur position est alors contrôlée par la machine électrique de traction 3. La méthode précédente reste applicable.

La transmission décrite à partir des figures, ne limite pas l'application de la méthode proposée, à une architecture hybride particulière. Cette méthode peut être mise en œuvre sur tout type de GMP disposant d'un moteur thermique, d'une transmission capable de déconnecter temporairement le moteur des roues, et d'une machine électrique ayant prise sur le vilebrequin du moteur. Son avantage principal est de maîtriser le déplacement du véhicule, lors de sa mise à l'arrêt par « appui » sur une compression du moteur.

Dans l'exemple décrit, le rapport engagé est un premier rapport de marche avant, qui est engagé en fermant les coupleurs C3 et C2 de la transmission conformément à la figure 4. Toutefois, sans sortir du cadre de l'invention, le procédé peut s'appliquer en engageant un autre rapport de marche avant ou un rapport de marche arrière, selon le sens du véhicule par rapport à la pente.

## Revendications

1. Procédé d'immobilisation à l'arrêt d'un véhicule routier par appui sur la résistance en compression de son moteur thermique (2), **caractérisé en ce qu'**il comporte les étapes suivantes :
- immobilisation du véhicule par ses freins de roue,
- coupure du moteur (2),
- ouverture de la transmission (1) du véhicule de manière à découpler le moteur (2) des roues,
- ajustement angulaire du vilebrequin du moteur (2) sur la compression d'au moins un cylindre réalisé par une machine électrique (8, 3) connectée au vilebrequin, et
- fermeture de la transmission (1) du véhicule.

2. Procédé d'immobilisation à l'arrêt d'un véhicule routier selon la revendication 1, **caractérisé en ce que** l'ensemble constitué par le moteur thermique et 1a machine électrique (8) n'est pas relié mécaniquement aux roues du véhicule, pendant l'ajustement angulaire du vilebrequin.

3. Procédé d'immobilisation à l'arrêt d'un véhicule routier selon la revendication 1 ou 2, **caractérisé en ce que** la machine (8) électrique est pilotable en effort et/ou en position.

4. Procédé d'immobilisation à l'arrêt d'un véhicule routier selon la revendication 1, **caractérisé en ce que** l'ajustement angulaire du vilebrequin, est aussi réalisé par les arbres internes de la transmission (1).

5. Procédé d'immobilisation à l'arrêt d'un véhicule routier selon la revendication 4, **caractérisé en ce que** l'ajustement angulaire du vilebrequin par les arbres internes de la transmission est contrôlé par une machine électrique de traction (3)

6. Dispositif d'immobilisation à l'arrêt d'un véhicule routier par appui sur la résistance en compression de son moteur thermique (2), **caractérisé en ce qu'**il comporte des moyens pour mettre en œuvre le procédé selon l'une des revendications précédentes et un premier moyen de couplage (C3) capable de connecter l'ensemble constitué par le moteur et une machine électrique (8) à la transmission, pour permettre l'ajustement angulaire du vilebrequin.

7. Dispositif d'immobilisation à l'arrêt d'un véhicule routier selon la revendication 6, **caractérisé en ce qu'**il comporte un deuxième moyen de couplage (C2) capable de connecter une machine électrique de traction (3) à la transmission pour faire varier la position des arbres de celle-ci lors de l'ajustement angulaire du vilebrequin.

8. Dispositif d'immobilisation à l'arrêt d'un véhicule routier selon la revendication 6 et 7, caractérisé en que la fermeture cumulée des deux moyens de couplage (C3, C2) assure l'engagement d'un rapport de transmission sur lequel le moteur thermique est connecté aux roues.

9. Dispositif d'immobilisation à l'arrêt selon la revendication 8, **caractérisé en ce que**, sur ce rapport, la machine électrique de traction (3) est également connectée aux roues.

## Patentansprüche

1. Verfahren zum Feststellen eines Straßenfahrzeugs im Stillstand durch Beaufschlagen der Druckfestigkeit seines Verbrennungsmotors (2), **dadurch gekennzeichnet, dass** es die folgenden Schritte umfasst:
- Feststellen des Fahrzeugs durch seine Radbremsen,
- Abschalten des Motors (2),
- Öffnen des Getriebes (1) des Fahrzeugs, um den Motor (2) von den Rädern zu entkoppeln,
- Winkeleinstellen der Motorkurbelwelle (2) auf den Druck mindestens eines Zylinders durch eine mit der Kurbelmaschine verbundende elektrische Maschine (8, 3) und
- Schließen des Getriebes (1) des Fahrzeugs.

2. Verfahren zum Feststellen eines Straßenfahrzeugs im Stillstand nach Anspruch 1, **dadurch gekennzeichnet, dass** die aus dem Verbrennungsmotor und der elektrischen Maschine (8) bestehende Einheit während der Winkeleinstellung der Kurbelwelle nicht mechanisch mit den Rädern des Fahrzeugs verbunden ist.

3. Verfahren zum Feststellen eines Straßenfahrzeugs im Stillstand nach Anspruch 1 oder 2, **dadurch gekennzeichnet, dass** die elektrische Maschine (8) kraft- und/oder lagegesteuert ist.

4. Verfahren zum Feststellen eines Straßenfahrzeugs im Stillstand nach Anspruch 1, **dadurch gekennzeichnet, dass** die Winkeleinstellung der Kurbelwelle auch durch die Innenwellen des Getriebes (1) erfolgt.

5. Verfahren zum Feststellen eines Straßenfahrzeugs im Stillstand nach Anspruch 4, **dadurch gekennzeichnet, dass** die Winkeleinstellung der Kurbelwelle durch die Innenwellen des Getriebes durch eine elektrische Zugmaschine (3) gesteuert wird.

6. Feststellvorrichtung eines Straßenfahrzeugs im Stillstand durch Beaufschlagen der Druckfestigkeit seines Verbrennungsmotors (2), **dadurch gekennzeichnet, dass** sie Mittel umfasst, um das Verfahren nach einem der vorhergehenden Ansprüche zu implementieren und ein erstes Kupplungsmittel (C3), das in der Lage ist, die aus dem Motor und einer elektrischen Maschine (8) bestehende Baugruppe mit dem Getriebe zu verbinden, um die Winkeleinstellung der Kurbelwelle zu ermöglichen.

7. Feststellvorrichtung eines Straßenfahrzeugs im Stillstand nach Anspruch 6, **dadurch gekennzeichnet, dass** sie ein zweites Kupplungsmittel (C2) umfasst, das in der Lage ist, eine elektrische Zugmaschine (3) mit dem Getriebe zu verbinden, um die Position der Wellen desselben während der Winkeleinstellung der Kurbelwelle zu verändern.

8. Feststellvorrichtung eines Straßenfahrzeugs im Stillstand nach Anspruch 6 und 7, **dadurch gekennzeichnet, dass** das kumulative Schließen der beiden Kupplungsmittel (C3, C2) das Einrücken eines Übersetzungsverhältnisses gewährleistet, auf dem der Verbrennungsmotor mit den Rädern verbunden ist.

9. Feststellvorrichtung im Stillstand nach Anspruch 8, **dadurch gekennzeichnet, dass** in diesem Verhältnis auch die elektrische Zugmaschine (3) mit den Rädern verbunden ist.

## Claims

1. Method of immobilizing a road vehicle at a standstill by pressing on the compressive strength of its internal combustion (2) engine, **characterized in that** it comprises the following steps:
- immobilization of the vehicle by its wheel brakes,
- engine (2) shutdown,
- opening of the vehicle transmission (1) so as to decouple the engine (2) from the wheels,
- angular adjustment of the engine (2) crankshaft on the compression of at least one cylinder made by an electric (8, 3) machine connected to the crankshaft, and
- closing the vehicle transmission (1).

2. Method for immobilising a road vehicle at a standstill according to claim 1, **characterized in that** the assembly consisting of the heat engine and the electric (8) machine is not mechanically connected to the wheels of the vehicle, during the angular adjustment of the crankshaft.

3. Method for immobilising a road vehicle at a standstill according to claim 1 or 2, **characterised in that** the electric (8) machine is controllable in terms of force and/or position.

4. Method for immobilising a road vehicle at standstill according to claim 1, **characterized in that** the angular adjustment of the crankshaft is also carried out by the internal shafts of the transmission (1).

5. Method for immobilising a road vehicle at standstill according to claim 4, **characterized in that** the angular adjustment of the crankshaft by the internal shafts of the transmission is controlled by an electric traction (3) machine

6. Device for immobilising a road vehicle at a standstill by pressing the compressive strength of its combustion (2) engine, **characterized in that** it comprises means for implementing the method according to one of the preceding claims and
a first coupling means (C3) capable of connecting the assembly consisting of the engine and an electric (8) machine to the transmission, to allow the angular adjustment of the crankshaft.

7. Device for immobilising a road vehicle at a standstill according to claim 6, **characterized in that** it comprises a second coupling means (C2) capable of connecting an electric traction machine (3) to the transmission to vary the position of the shafts thereof during the angular adjustment of the crankshaft.

8. Device for immobilising a road vehicle at a standstill according to claims 6 and 7, **characterized in that** the cumulative closure of the two coupling means (C3, C2) ensures the engagement of a transmission ratio on which the combustion engine is connected to the wheels.

9. Device for immobilising at a standstill according to claim 8, **characterized in that**, in this ratio, the electric traction (3) machine is also connected to the wheels.
